# FASCICULE DE BREVET EUROPEEN

(11) **EP 4 107 420 B1**
(45) Date de publication et mention de la délivrance du brevet: **03.12.2025**
(21) Numéro de dépôt: 21708288.2
(22) Date de dépôt: 16.02.2021
(51) Int. Cl.: F17C 1/16

(54) **RÉSERVOIR POUR ERGOLS CRYOGÉNIQUES**
TANK FÜR KRYOGENE TREIBSTOFFE
TANK FOR CRYOGENIC PROPELLANTS

(30) Priorité: 17.02.2020 FR 2001563
(43) Date de publication de la demande: 28.12.2022
(73) Titulaire: Centre National d'Études Spatiales, 75039 Paris Cedex 01 (FR); CMP Composites, 33320 Eysines (FR)
(72) Inventeur: OSWALD, Jean, 92160 Antony (FR); BENABES, Jérôme, 33130 Bègles (FR); GUERIN, Yannick, 78300 Poissy (FR); LAVAUD, Antoine, 33680 Lacanau (FR)
(74) Mandataire: Germain Maureau
(86) Numéro de dépôt international: PCT/FR2021/050266
(87) Numéro de publication internationale: WO 2021/165607

(56) Documents cités:
- US-A1- 2004 026 431
- US-A1- 2009 020 536

## Description

### Introduction

La présente invention concerne un réservoir en matériau composite configuré pour recevoir des fluides ou des gaz sous pression et en particulier des ergols cryogéniques ou autres combustibles inflammables (carburant/comburant), en vue d'applications dans le domaine spatial, l'aéronautique ou pour les véhicules terrestres.

Des réservoirs composites sont connus de US2004/026431A1 et de US2009/020536A1.

Selon un autre aspect, la présente invention concerne un procédé de fabrication d'un tel réservoir. Les réservoirs recevant des fluides sous pression dans le domaine spatial doivent être légers, résistants, étanches et leur prix doivent être attractifs. Jusqu'à présent, afin de résister aux très basses températures tout en conservant des propriétés d'étanchéité satisfaisantes, ces réservoirs étaient conçus en métal et plus généralement en aluminium. Toutefois, le coût de revient de la mise en forme du métal est élevé et le réservoir conçu est lourd. Les ingénieurs se sont alors tournés vers l'utilisation de matériaux plus légers, tels que les matériaux composites, formés de polymères thermoplastiques ou thermodurcissables qui présentent une bonne résistance mécanique.

Cependant une nouvelle problématique est apparue avec l'utilisation de ces matériaux composites. En effet, leur étanchéité est mise à rude épreuve du fait de la pression du fluide reçu, des températures d'utilisation cryogéniques et des chocs thermiques. La majorité de ces matériaux composites se fatiguent et des microfissurations apparaissent pouvant entraîner des fuites. Les réservoirs formés à partir de ces matériaux donnent lieu à des fuites incompatibles avec une utilisation dans des lanceurs.

Une solution préconisée nécessite l'emploi d'une enveloppe métallique interne très fine placée dans le réservoir de matériau composite. Toutefois, le coût de fabrication d'une telle enveloppe reste prohibitif.

Une solution alternative consiste à rapporter un film d'un matériau polymérique sur la surface interne du réservoir constitué de carbone enduit de résine de polycyanate. Toutefois, les tests de mise sous pression à température ambiante montrent une défaillance au niveau du film polymérique qui conduit à une fuite de fluide.

Un des buts de la présente invention vise à pallier ces inconvénients.

A cet effet, la présente invention propose un réservoir composite destiné à recevoir et stocker un ergol cryogénique, conformément à la revendication 1, le réservoir composite comprenant :
- une enveloppe d'étanchéité délimitant une chambre de stockage pour l'ergol cryogénique, l'enveloppe d'étanchéité comprenant un premier matériau composite, et
- une couche de renfort configurée pour couvrir au moins partiellement l'enveloppe d'étanchéité, la couche de renfort comprenant un second matériau composite.

Ainsi, le réservoir est composé d'une couche de renfort communément appelée « coque » et d'une enveloppe d'étanchéité communément appelée « liner » qui sont toutes les deux composites. Grâce à l'utilisation de matériaux composite pour l'enveloppe d'étanchéité et la couche de renfort, les risques de délamination ou de perte d'étanchéité à l'interface sont réduits. De plus, ces matériaux sont légers et moins onéreux que le métal.

Par le terme 'matériau composite' on entend dans le présent document un assemblage d'au moins deux composants non miscibles, mais ayant une forte capacité de pénétration, et dont les propriétés se complètent, pour former un matériau aux performances globales améliorées.

Avantageusement, le premier matériau composite est identique au second matériau composite. Ainsi, la cohésion à l'interface de l'enveloppe d'étanchéité et de la couche de renfort est très forte, les comportements des deux éléments sont proches face à différentes contraintes, dont la pression et les chocs thermiques.

Selon une disposition, le premier matériau composite présente une nature identique au second matériau composite mais l'enveloppe d'étanchéité et la couche de renfort présentent des propriétés différentes liées aux procédés d'obtention différents de chacun de ces deux matériaux. Cette configuration peut être recherchée pour des applications très particulières, par exemple pour permettre une rupture à l'allongement de la matrice (fissuration) différente pour l'enveloppe et la couche de renfort tout en conservant un comportement identique en termes de déformations globales de l'enveloppe d'étanchéité et de la couche de renfort. Ceci peut être le cas lorsque l'enveloppe d'étanchéité et la couche de renfort ne présentent pas la même épaisseur, ne présentent pas la même forme (par exemple textile et un enroulement filamentaire) ou lorsque le procédé d'obtention diffère. Il est toutefois possible de conserver une très bonne cohésion entre les deux éléments

De préférence la couche de renfort couvre la totalité de l'enveloppe d'étanchéité.

Selon une disposition, le premier matériau composite et le second matériau composite comprennent chacun des fibres de carbone imprégnées d'un polymère thermodurcissable, telle qu'une résine époxy. Le carbone présente l'avantage d'être léger, raide et peu sensible aux contraintes thermiques (coefficient de dilatation thermique proche de 0) tandis que le polymère thermodurcissable a fort allongement à rupture conduit à former une matrice qui lie l'intégralité des renforts.

Le premier matériau composite comprend un textile composite comportant des fibres de carbone imprégnées d'un polymère thermodurcissable.

Des exemples de réalisation de premiers matériaux composites comprenant des fibres de carbone et une matrice époxy thermodurcissable sont des couples carbone/époxy : T300/5208, T300/914, IM6/914, M55J/M18, AS4/ 3501-6, IM7/8552.

De préférence, le premier matériau composite comprend un textile (ou renfort) de fibres de carbone T700 (Toray) 3K tissées selon le motif sergé 2/2 imprégné d'un polymère thermodurcissable LY3508 disponible auprès du fabricant Huntsman.

L'enveloppe d'étanchéité comprend un drapage de plis dudit textile composite. Le textile est devenu, après infusion, un textile composite
Le nombre de plis du drapage est déterminé selon les dimensions du réservoir à obtenir, les dimensions du pli et afin d'obtenir une enveloppe d'étanchéité qui comprenne deux à quatre épaisseurs du textile composite.

Selon une disposition, le drapage de plis comprend un recouvrement partiel des plis adjacents. Le recouvrement des plis évite la fragilité d'une couche textile qui serait formée par juxtaposition de deux plis bord à bord. De plus, ce recouvrement conduit à de meilleures propriétés d'étanchéité.

Selon une possibilité, dans l'enveloppe d'étanchéité, chacun des plis recouvre environ la moitié de la surface du pli adjacent.

De préférence, dans l'enveloppe d'étanchéité, chacun des plis recouvre environ deux tiers de la surface du pli adjacent.

De préférence, le textile de fibres de carbone T700 3K tissées (avant infusion d'un polymère thermodurcissable) est un tissu de structure biaxiale 0/90 ayant un grammage compris entre 180g/m2 et 220g/m2. Par exemple, lorsque l'enveloppe d'étanchéité présente 3 épaisseurs du textile composite, le grammage total est d'environ 600g/m² et l'épaisseur atteint 0.6 mm. Ce tissu présente avantageusement un maillage de petite taille de sorte à éviter un point d'accumulation ponctuel de résine entre les mailles (lors de l'infusion), ce qui pourrait conduire à une fissuration locale lors des sollicitations thermiques. Une fois infusé, le textile obtenu est un textile composite comprenant une grande uniformité qui confère des propriétés homogènes sur l'ensemble des plis.

De préférence, le premier matériau composite comprend un taux volumique de fibres de carbone compris entre 45% et 65% du volume total du premier matériau composite.

Le restant de la composition est constitué du polymère thermodurcissable, par exemple de la résine époxy, qui a été infusé dans les fibres de carbone après la constitution du drapage. Ce taux d'imprégnation associé à un procédé permettant de limiter fortement l'introduction de porosités dans la matrice garantit un comportement structurel optimal tant sous sollicitations thermiques et mécaniques combinées et permet de réduire les risques de fissuration de la matrice.

Avantageusement, l'enveloppe d'étanchéité comprend deux pièces constituées du textile composite, chacune des deux pièces ayant une forme globale de cylindre et comprend une première région d'extrémité hémisphérique et une seconde région d'extrémité ouverte, la seconde région d'extrémité ouverte de chacune des deux pièces étant assemblées entre elles par emboitement et collage avec une colle époxy.

Selon une autre disposition, l'enveloppe d'étanchéité comprend uniquement deux pièces constituées du textile composite.

Selon une disposition, le réservoir composite comprend deux organes de raccordement opposés et intégrés dans l'enveloppe d'étanchéité, l'interface entre chacun des deux organes de raccordement et l'enveloppe d'étanchéité comprend un élément de jonction formé d'un polymère thermodurcissable, tel qu'une colle époxy. Selon un autre exemple, le polymère thermodurcissable est du polyuréthane. Cet élément de jonction permet d'absorber les déformations différentielles entre les organes de raccordement et l'enveloppe d'étanchéité et d'éviter ainsi une décohésion des deux éléments et permet de limiter l'apparition de surcontrainte sur une arête vive présente sur les organes de raccordement lors de la mise sous pression et mise en froid, qui pourraient provoquer une fuite.

Avantageusement, la colle époxy (3M scotchweld EC2216 B/A), ou de la colle polyuréthane (Axson Adekit 236) a été préalablement déposée sur chacun des organes de raccordement avant l'intégration dans l'enveloppe.

Selon une disposition, les organes de raccordement sont deux embases métalliques ou composite carbone / époxy, destinées à la connectique.

Selon une disposition, chacun des deux organes de raccordement sont intégrés dans la première région d'extrémité hémisphérique de chacune des deux pièces de l'enveloppe d'étanchéité.

De préférence, l'enveloppe d'étanchéité couvre la surface externe de chacun des éléments de jonction.

Avantageusement, une surface interne de l'enveloppe d'étanchéité délimitant la chambre de stockage est couverte au moins en partie par un revêtement fluoré, de préférence en téflon.

Il est entendu dans le présent document que le revêtement fluoré est en contact direct avec la surface interne de l'enveloppe d'étanchéité. Le revêtement fluoré est déposé directement sur la surface interne, sans nécessiter la présence d'une couche d'accroche adhésive ou de colle entre la surface internet et le revetement. Autrement dit, la surface interne de l'enveloppe d'étanchéité délimitant la chambre de stockage est directement couverte au moins en partie par un revêtement fluoré, de préférence en téflon.

De préférence, le revêtement fluoré couvre la totalité de la surface interne de l'enveloppe d'étanchéité destinée à être en contact avec le fluide ou l'ergol cryonique. Selon une disposition, le revêtement fluoré couvre la totalité de la surface interne de l'enveloppe d'étanchéité et la surface interne de chacun des éléments de jonction. Par surface interne, on entend dans le présente document une surface de l'élément de jonction orientée vers l'intérieur de la chambre de stockage de l'ergol.

Le cas d'un revêtement en téflon, qui est un polymère fluoré donc non oxydable par l'oxygène, permet d'obtenir un revêtement compatible LOX et GOX (de la terminologie anglo-saxonne « Gaseous Oxygen » signifiant oxygène gazeux ou Liquid Oxygen), ce qui est important pour des réservoirs recevant et stockant des comburants gazeux ou liquides.

En outre, la famille des matériaux de polymères fluorés conserve une ductilité non nulle même aux alentours des températures cryogéniques. Ainsi les risques de microfissures observées chez d'autres polymères sont très limités dans le cas d'utilisation de ces polymères fluorés à basse température. Ces polymères fluorés conservent ainsi une très bonne étanchéité aux températures d'utilisation considérées.

Selon une disposition, la couche de renfort comprend un enroulement filamentaire de fibres de carbone imprégnées d'un polymère thermodurcissable, composant le second matériau composite, sur l'enveloppe d'étanchéité. L'enveloppe d'étanchéité joue ainsi le rôle de mandrin à l'enroulement filamentaire et offre une garantie supplémentaire contre les risques de perméation.

Avantageusement, l'enroulement filamentaire comprend une superposition de couches d'enroulement hélicoïdal par rapport à l'axe d'extension longitudinal de l'enveloppe d'étanchéité, entre lesquelles sont intercalées au moins une couche d'enroulement circonférentiel orienté à 90° par rapport à l'axe d'extension longitudinal de l'enveloppe d'étanchéité. L'enroulement hélicoïdal confère une tenue à la traction/compression et l'enroulement circonférentiel confère une tenue à la pression. Le fait d'intercaler au moins une couche/pli d'enroulement circonférentiel entre une ou plusieurs couches/pli(s) d'enroulement hélicoïdal limite la formation d'interstices où de la résine époxy pourrait être stockée, ce qui formeraient des points de fragilité. Les interstices remplis de résine époxy seraient à l'origine d'une diminution de l'homogénéité de la structure de la couche de renfort composite et des propriétés associées. Notamment, la résine seule ne présente pas la même résistance à la fissuration que celle atteinte lorsqu'elle est associée dans les justes proportions aux fibres de carbone.

De préférence, l'enroulement filamentaire comprend la superposition de plusieurs empilements de trois couches d'enroulement hélicoïdal et d'une couche d'enroulement circonférentiel.

Selon un deuxième aspect, l'invention propose un procédé de fabrication d'un réservoir composite tel que précédemment décrit, le procédé comprenant une étape de formation de l'enveloppe d'étanchéité dans un premier matériau composite suivie d'une étape de fabrication d'une couche de renfort dans un second matériau composite sur l'enveloppe d'étanchéité de sorte à couvrir au moins en partie l'enveloppe d'étanchéité.

Selon une disposition, l'étape de formation de l'enveloppe d'étanchéité comprend une première étape de drapage de plis d'un textile de fibres de carbone suivie d'une étape d'infusion d'un polymère thermodurcissable des plis drapés. Ceci permet d'obtenir ledit textile composite.

Selon une possibilité, l'étape de fabrication d'une couche de renfort comprend une étape comprenant un enroulement filamentaire de fibres de carbone imprégnées d'un polymère thermodurcissable. Ceci permet d'obtenir le second matériau composite. D'autres aspects, buts et avantages de la présente invention apparaîtront mieux à la lecture de la description suivante donnée à titre d'exemple non limitatif et fait en référence aux dessins annexés. Dans la suite de la description, par souci de simplification, des éléments identiques, similaires ou équivalents des différentes formes de réalisation portent les mêmes références numériques. Les figures ne respectent pas nécessairement l'échelle de tous les éléments représentés de sorte à améliorer leur lisibilité et dans lesquelles :
[Fig. 1] illustre une vue en coupe schématique d'un élément de jonction entre une enveloppe d'étanchéité et une embase du réservoir composite selon un mode de réalisation de l'invention,
[Fig. 2] illustre une étape de fabrication d'une enveloppe d'étanchéité du réservoir composite selon le mode de réalisation de la figure 1,
[Fig. 3] illustre une vue en coupe schématique d'une enveloppe d'étanchéité couverte par un revêtement fluoré selon le mode de réalisation de la figure 1,
[Fig. 4] illustre une vue schématique d'un enroulement filamentaire hélicoïdal sur une enveloppe d'étanchéité du réservoir composite selon le mode de réalisation de la figure 1,
[Fig. 5] illustre une vue schématique d'un enroulement filamentaire circonférentiel sur une enveloppe d'étanchéité du réservoir composite selon le mode de réalisation de la figure 1,
[Fig. 6] illustre une vue schématique en coupe d'un réservoir composite selon le mode de réalisation de la figure 1.

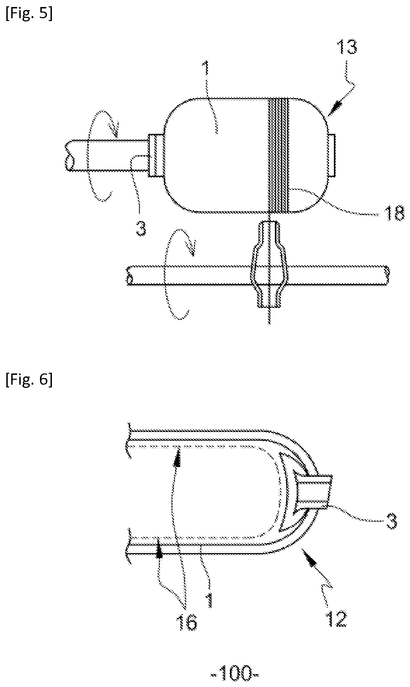

Comme illustré à la figure 6, le réservoir composite 100 de la présente invention comprend une enveloppe d'étanchéité 1 en un premier matériau composite et une couche de renfort 2 constituée d'un second matériau composite et deux organes de raccordement 3 opposés, le premier et le second matériau composite comportant des fibres de carbone imprégnées d'une résine thermodurcissable, telle qu'une résine époxy.

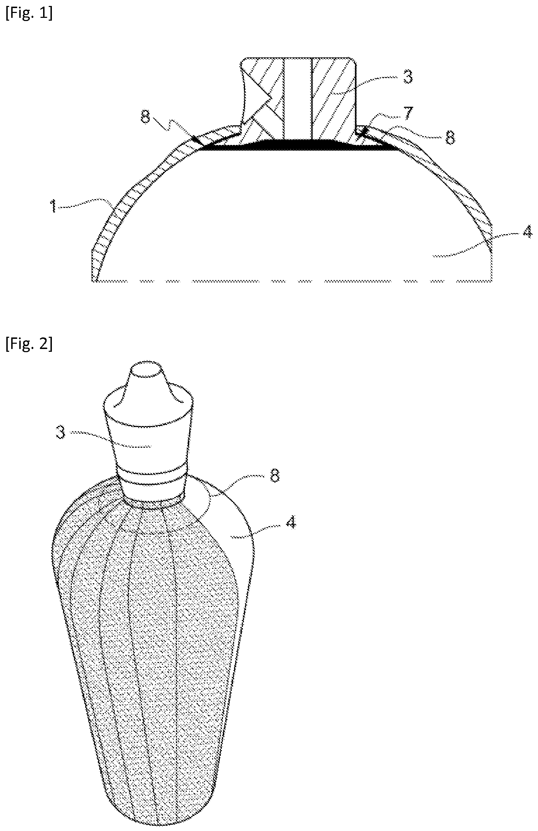

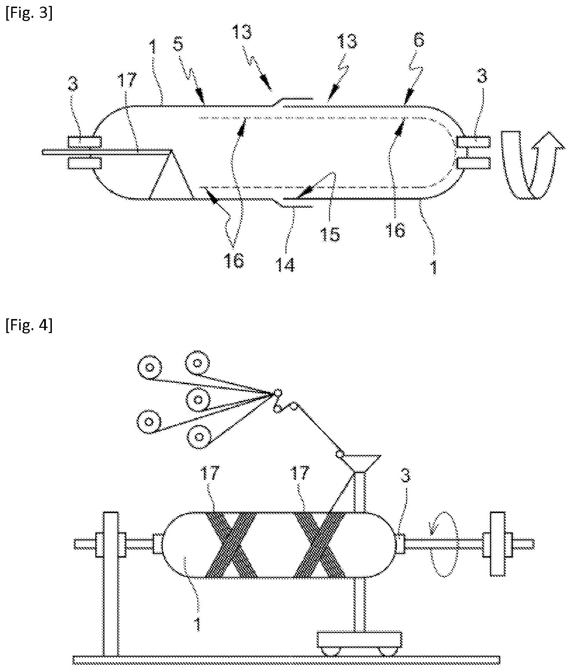

Nous décrivons dans un premier temps les étapes du procédé de fabrication de l'enveloppe d'étanchéité 1 formée à partir d'un textile de fibres de carbone tissées et imprégnées d'une résine thermodurcissable du premier matériau composite en référence aux figures 1 à 3. Puis nous décrirons les étapes de fabrication de la couche de renfort 2 par enroulement filamentaire du second matériau composite sur l'enveloppe d'étanchéité 1 en référence aux figures 4 à 6.

### Enveloppe d'étanchéité 1

Un demi-mandrin 4 métallique présentant la forme globale d'un cylindre comprenant une portion d'extrémité hémisphérique est fourni pour le moulage d'une première pièce 5 de l'enveloppe d'étanchéité 1. Un organe de raccordement 3, couramment dénommé 'embase', destiné à la connectique et formé en un matériau métallique est tout d'abord préparé pour former une interface étanche avec l'enveloppe d'étanchéité 1 dans laquelle il est destiné à être intégrée. En effet, il est nécéssaire de prévoir une interface souple et resistante pour associer l'embase 3 et l'enveloppe d'étanchéité 1 en vue de réduire les effet de la différence de dilatation entre l'embase 3 et l'enveloppe 1 dans les conditions d'utilisation.

Pour ce faire, l'organe de raccordement 3 est enduit sur toute sa surface inférieure, sur la portion de surface supérieure hemisphérique 7 et sur ses arrêtes vives, pouvant être source de délimination, par de la colle époxy ou polyuréthane, telle que la colle EC2216 ou Axson A236. L'organe de raccordement 3 est ensuite positionné sur la portion d'extrémité hémisphérique du demi-mandrin 4 (visible figure 1) de façon à obtenir un intervalle calibré entre la colle époxy et le demi-mandrin 4, une contreforme (non illustrée) est également mise en place sur la surface supérieure hémisphérique 7 de l'organe de raccordement 3 en laissant un interstice de dimension determinée pour obtenir une épaisseur de colle calibrée sur la face supérieure de l'organe de raccordement 3. L'ensemble est mis sous vide afin de chasser l'excès de colle ainsi que les porosités. Quand la colle est polymérisée, la contreforme est retirée et la partie encollée de la surface supérieure hemisphérique de l'embase 3 servira à former un élément de jonction 8 souple, en polymère thermodurcissable entre l'embase 3 et l'enveloppe d'étanchéité 1 (illustré à la figure 3).

Selon une autre disposition non illustrée, l'embase 3 est en matériau composite.

Un textile sergé 2/2 de fibres de carbone T700 3k tissées avec une orientation 90/0° (grammage d'environ 200g/m2) est ensuite fourni en vue de la découpe de plis 11 à l'aide d'un patron dédié, spécifique aux dimensions du demi-mandrin 4. Chacun des plis 11 découpés sont drapés sur le demi-mandrin 4 en couvrant partiellement un pli 11 adjacent. Selon une disposition illustrée à la figure 2, chaque pli 11 couvre deux tiers de la largeur d'un pli 11 adjacent et le drapage final comprend dix-huit plis 11 répartis sur le demi- mandrin 4, soit l'équivalent de trois épaisseurs du textile original. Selon une autre possibilité non illustrée, chacun des plis 11 couvre environ la moitié du pli 11 adjacent selon les propriétés de l'enveloppe d'étanchéité 1 souhaitées Chacun des plis 11 couvrent par ailleurs l'élément de jonction 8 (sur la surface supérieure hemisphérique de l'organe de raccordement 3) de sorte à obtenir une interface étanche (visible à la figure 1).

Voici plus en détail le descriptif détaillé concernant la réalisation du drapage selon l'invention (non illustré): de la colle de positionnement est pulvérisée sur la surface du textile de fibres de carbone fourni (colle de positionnement pour infusion de type Airtech airtac2 - pulvérisation d'environ 2gr/m²). Un film dit 'film séparateur' est déposé sur la surface du textile encollée, ce qui permet de maintenir le textile pendant l'application du patron sur le textile, de procéder à la découpe sans effilocher les fibres, et de déplacer le textile sans l'endommager. Le textile est alors découpé selon la forme du patron pour former un pli 11 qui correspond à une surface angulaire de 60 degrés sur le demi-mandrin 4.

De la colle de positionnement de même nature que celle précédement utilisée est pulvérisée sur la surface du textile destinée à être en contact avec le demi-mandrin 4. Une fois la surface encollée du textile positionnée sur le demi-mandrin 4, le film séparateur est retiré. Tous les plis 11 formés sont drapés sur le demi-mandrin 4 en recouvrant les deux tiers de la largeur du pli 11 adjacent.

Une fois le drapage obtenu, le premier matériau composite est obtenu par infusion de résine thermodurcissable dans les plis 11 du textile jusqu'à atteindre un taux d'imprégnation compris entre 50 et 60%. L'infusion est réalisée à l'aide de techniques connues utilisant une grille drainante ayant pour fonction d'assurer la circulation des fluides et un drainant circonférentiel pour transmettre le vide dans l'enceinte délimitée par une bâche à vide couvrant le drapage. Le vide est créé dans l'enceinte jusqu'à atteindre 5 mbars pendant 4 heures à 40-50°C. Ceci permet d'extraire toutes les particules, l'eau et l'air résiduel dans le textile et dans la colle, qui risqueraient de limiter l'étanchéité de l'enveloppe 1 dans les conditions d'utilisation. Puis la résine est conditionnée en température pour diminuer sa viscosité, dégazée sous vide pour éliminer les sources de porosité. Elle est ensuite drainée et infusée dans les textiles pour renfort grâce au vide dans l'enceinte jusqu'à atteindre un taux d'imprégnation optimal des fibres de carbone du textile, soit environ 60% en volume de résine par rapport au volume du premier matériau composite (textile et matrice), permettant l'obtention d'une enveloppe d'étanchéité 1 très étanche. Une fois l'opération de polymérisation terminée (à 40-50°C), la température est ramenée à l'ambiante. A la fin de ce processus d'infusion et de polymérisation, le textile initialement utilisé dans le drapage est devenu un textile composite. La différence de CTE (acronyme anglo-saxon 'coefficient of thermal expansion') des matériaux considérés permet de démouler aisément la pièce 5 de l'enveloppe d'étanchéité 1 en textile composite : la contraction du demi-mandrin 4 en aluminium est importante tandis que la contraction du textile composite est très faible.

Comme illustré à la figure 3, l'enveloppe d'étanchéité 1 est constituée de pièces, appelée demi-cylindres 5,6 obtenues selon la méthode précédemment décrite. Chacune des pièces 5,6 ayant une forme complémentaire à celle du demi-mandrin 4 sur laquelle elle a été moulée. Cette forme est globalement cylindrique et comprend une première région d'extrémité hémisphérique 12 et une seconde région d'extrémité ouverte 13. Les secondes régions d'extrémité ouvertes 13 de deux pièces 5,6 sont assemblées entre elles par emboitement et collage avec une colle époxy pour former l'enveloppe d'étanchéité 1. Pour ce faire, les deux pièves 5,6 de l'enveloppe d'étanchéité 1 sont moulées au préalable avec un décroché local du diamètre ou autrement dit, le moulage est effectué de sorte qu'une portion d'extrémité de la seconde région d'extrémité ouverte 13 présente un diamètre plus important qu'une portion centrale adjacente de la seconde région d'extrémité ouverte 13. Ensuite, l'une des deux pièces 5 est ajustée en longueur, tout en conservant la zone de décroché local du diamètre pour former une région d'emboitement 14, et l'utre des deux pièces 6 est ajustée en longueur de façon à supprimer ce décroché local du diamètre et obtenir une région d'emboitement complémentaire 15, rendant possible l'emboitement et le collage des deux pièces 5,6.

Egalement illustré à la figure 4, un revêtement fluoré 16 est réalisé par une étape de pulvérisation à l'aide par exemple d'une cane endoscopique 17, d'une composition liquide comprenant un polymère fluoré, un pré-polymère et un réticulant dudit pré-polymère, sur la surface interne de l'enveloppe d'étanchéité 1 délimitant la chambre de stockage de l'ergol, de sorte à former une couche de recouvrement (l'enveloppe étant avantageusement entrainée en rotation selon son axe longitudinal d'extension). Puis une étape de polymérisation de la couche de recouvrement est appliquée de sorte à générer un liant polymère encapsulant le polymère fluoré et former un revêtement fluoré 16 couvrant au moins en partie la surface interne.

Lorsque le pré-polymère de la composition liquide est capable de polymériser sous l'action d'un rayonnement UV, l'étape de polymérisation comprend l'application d'un rayonnement UV en direction de la couche de recouvrement.

Dans les autres cas, l'étape de polymérisation comprend l'application d'un traitement thermique en plaçant l'enveloppe d'étanchéité 1 dans une étuve ou par l'application d'une irradiation IR en direction de la couche de recouvrement via une canne endoscopique 17 dirigée depuis l'embase 3 métallique.

Selon une possibilité, la formation de ce revêtement fluoré 16 est réalisée par une étape de pulvérisation de fluorimid 2B disponible auprès de la société Fluorotechnique suivie d'une étape de polymérisation par traitement thermique à 120°C. Ceci permet l'obtention d'un revêtement en téflon d'une épaisseur d'environ 0.1 mm. Selon une autre possibilité, le revêtement en téflon est obtenu par la dépose de plusieurs couches successives des précurseurs du téflon.

Selon une variante de réalisation, la formation d'un revêtement fluoré 16 est réalisée sur les deux pièces 5,6 de l'enveloppe préalablement à leur emboitement. Bien entendu, la région d'emboitement 14 et la région d'emboitement complémentaire 15 sont protégées de la pulvérisation de la composition précurseur du polymère fluoré de sorte à éviter tout endommagement lors de l'emboitement.

### Couche de renfort 2

Comme illustré sur les figures 4 à 6, la couche de renfort 2 est formée par un enroulement filamentaire de fibres de carbone préalablement imprégnées d'un polymère thermodurcissable directement au contact de l'enveloppe d'étanchéité 1. La technique consistant à obtenir un enroulement filamentaire est bien connue dans l'état de la technique. Elle consiste à déposer à l'air libre des fibres de carbone pré-imprégnées en résine thermodurcissable sur l'enveloppe d'étanchéité 1. Les allers-retours du robot vont créer des couches du premier matériau composite complètes. Dans un mode de réalisation de l'invention, l'enroulement filamentaire comprend le dépôt de couches d'enroulement hélicoïdal 17 par rapport à l'axe de rotation ou l'axe longitudinal d'extension de l'envelope d'étanchéité (se reporter à la figure 4) et le dépôt de couches d'enroulement circonférentiel 18 (se reporter à la figure 5) dans lequel les fibres de carbone imprégnées forment un angle d'environ 90 degrès avec l'axe de rotation de l'enveloppe d'étanchéité 1 (autrement appelé l'axe longitudinal d'extension de l'enveloppe d'étanchéité 1).

L'alternance de couches d'enroulement hélicoïdal 17 et d'enroulement circonférentiel 18 conduit à une structure composite stratifiée du type 90°/±θ par rappot à l'axe longitudinal du réservoir. Les couches à 90° sont destinées à reprendre les efforts circonférentiels induits par la pression interne sur les parois tubulaires alors que les couches croisées reprennent principalement les efforts longitudinaux induits par la pression sur les régions hémisphériques et les embases 3 du réservoir composite 100 ainsi que par les efforts pouvant transiter par le réservoir dans le cas ou il participe à la structure mère (le réservoir est rendu structurel sur les lanceurs)

La couche de renfort 2 comprend une résine époxy qui n'a pas été dégazée et qui peut contenir des porosités, mais la couche de renfort 2 ayant pour objectif de conférer une résistance mécanique au réservoir 100, ces porosités n'entrainent aucune défaillance, notamment en terme d'étanchéité qui est assurée par l'enveloppe d'étanchéité 1, ni en terme de tenue structurelle dans la mesure où celle-ci est assurée par la fibre

Par ailleurs, comme visible sur les figures, l'enveloppe d'étanchéité 1 sert de support, tel un mandrin, pour la réalisation de la couche de renfort 2. Un avantage à cette configuration réside ici en ce que l'enveloppe d'étanchéité 1 ne doit pas être retirée à la fin du procédé de fabrication de la couche de renfort 2. Elle participe avantageusement à garantir l'étanchéité du réservoir. De plus la cohésion à l'interface entre l'enveloppe d'étanchéité 1 et de la couche de renfort 2 d'un matériau composite de même nature est bien meilleure à celle obtenue avec un réservoir de type IV.

Ainsi, la présente invention propose un réservoir composite 100 dont l'enveloppe d'étanchéité 1 et la couche de renfort 2 comprennent chacun deux matériaux composites principaux identiques, ce qui limite l'apparition de défaut et de fuite de fluide par des dilatations différentielles. L'enveloppe d'étanchéité 1 est obtenue par un procédé réalisé sous vide. La couche de renfort 2 obtenue à l'air améliore la résistance à la traction et la pression du réservoir 100. L'association de ces deux éléments 1,2 permettent d'atteindre des propriétés d'étanchéité, de résistance à la pression, aux agressions chimiques (oxydation / hydrolyse) et aux contraintes thermiques, compatibles avec le stockage d'oxygène ou d'hydrogène liquide et à moindre coûts de production.

## Revendications

1. Réservoir composite (100) destiné à recevoir et stocker un ergol cryogénique, le réservoir composite (100) comprenant :
- une enveloppe d'étanchéité (1) délimitant une chambre de stockage pour l'ergol cryogénique, l'enveloppe d'étanchéité (1) comprenant un premier matériau composite, et
- une couche de renfort (2) configurée pour couvrir au moins partiellement l'enveloppe d'étanchéité (1), la couche de renfort (2) comprenant un second matériau composite, le premier matériau composite comprenant un textile composite comportant des fibres de carbones imprégnées d'un polymère thermodurcissable et l'enveloppe d'étanchéité (1) comprenant un drapage de plis (11) dudit textile composite.

2. Réservoir composite (100) selon la revendication 1, dans lequel le premier matériau composite et le second matériau composite comprennent chacun des fibres de carbone imprégnées d'un polymère thermodurcissable, telle qu'une résine époxy.

3. Réservoir composite (100) selon la revendications 1 à 2, dans lequel le premier matériau composite comprend un taux volumique de fibres de carbone compris entre 45 et 65% du volume total du premier matériau composite.

4. Réservoir composite (100) selon l'une des revendications 1 à 3, dans lequel l'enveloppe d'étanchéité (1) comprend deux pièces (5,6) constituées du textile composite, chacune des deux pièces (5,6) ayant une forme globale de cylindre et comprend une première région d'extrémité hémisphérique (12) et une seconde région d'extrémité ouverte (13), la seconde région d'extrémité ouverte (13) de chacune des deux pièces (5,6) étant assemblées entre elles par emboitement et collage avec une colle époxy.

5. Réservoir composite (100) selon l'une des revendications 1 à 4, comprenant deux organes de raccordement (3) opposés intégrés dans l'enveloppe d'étanchéité (1), l'interface entre chacun des deux organes de raccordement (3) et l'enveloppe d'étanchéité (1) comprend un élément de jonction (8) formé d'un polymère thermodurcissable, tel qu'une colle époxy.

6. Réservoir composite (100) selon l'une des revendications 1 à 5, dans lequel une surface interne de l'enveloppe d'étanchéité (1) délimitant la chambre de stockage est couverte au moins en partie par un revêtement fluoré (16).

7. Réservoir composite (100) selon l'une des revendications 1 à 6, dans lequel la couche de renfort (2) comprend un enroulement filamentaire de fibres de carbone imprégnées d'un polymère thermodurcissable, composant le second matériau composite, sur l'enveloppe d'étanchéité (1).

8. Réservoir composite (100) selon la revendication 7, dans lequel l'enroulement filamentaire comprend une superposition de couches d'enroulement hélicoïdal (17) par rapport à l'axe d'extension longitudinal de l'enveloppe d'étanchéité (1), entre lesquelles sont intercalées au moins une couche d'enroulement circonférentiel (18) orienté à 90° par rapport à l'axe d'extension longitudinal de l'enveloppe d'étanchéité (1).

9. Procédé de fabrication d'un réservoir composite (100) selon l'une des revendications 1 à 8, le procédé comprenant une étape de formation de l'enveloppe d'étanchéité (1) dans un premier matériau composite suivie d'une étape de fabrication d'une couche de renfort (2) dans un second matériau composite sur l'enveloppe d'étanchéité (1) de sorte à couvrir au moins en partie l'enveloppe d'étanchéité (1).

## Patentansprüche

1. Verbundbehälter (100) zur Aufnahme und Lagerung eines kryogenen Treibstoffs, wobei der Verbundbehälter (100) Folgendes umfasst:
- eine Dichtungshülle (1), die eine Speicherkammer für den kryogenen Treibstoff begrenzt, wobei die Dichtungshülle (1) ein erstes Verbundmaterial umfasst, und
- eine Verstärkungsschicht (2), die so eingerichtet ist, dass sie die Dichtungshülle (1) mindestens teilweise abdeckt, wobei die Verstärkungsschicht (2) ein zweites Verbundmaterial umfasst, wobei das erste Verbundmaterial ein Verbundtextil umfasst, das Kohlefasern aufweist, die mit einem duroplastischen Polymer imprägniert sind, und die Dichtungshülle (1) eine Faltendrapage (11) des Verbundtextils umfasst.

2. Verbundbehälter (100) nach Anspruch 1, wobei das erste Verbundmaterial und das zweite Verbundmaterial jeweils Kohlefasern umfassen, die mit einem duroplastischen Polymer, wie einem Epoxidharz, imprägniert sind.

3. Verbundbehälter (100) nach Anspruch 1 bis 2, wobei das erste Verbundmaterial einen Volumenanteil an Kohlefasern zwischen 45 und 65 % des Gesamtvolumens des ersten Verbundmaterials umfasst.

4. Verbundbehälter (100) nach einem der Ansprüche 1 bis 3, wobei die Dichtungshülle (1) zwei Teile (5, 6) umfasst, die aus dem Verbundtextil bestehen, wobei jedes der beiden Teile (5, 6) eine globale Zylinderform hat und einen ersten halbkugelförmigen Endbereich (12) und einen zweiten offenen Endbereich (13) umfasst, wobei der zweite offene Endbereich (13) jedes der beiden Teile (5, 6) durch Ineinanderstecken und Verkleben mit einem Epoxidkleber miteinander verbunden ist.

5. Verbundbehälter (100) nach einem der Ansprüche 1 bis 4, umfassend zwei gegenüberliegende Verbindungselemente (3), die in die Dichtungshülle (1) integriert sind, wobei die Schnittstelle zwischen jedem der beiden Verbindungselemente (3) und der Dichtungshülle (1) ein Verbindungselement (8) umfasst, das aus einem duroplastischen Polymer, wie einem Epoxidkleber, ausgebildet ist.

6. Verbundbehälter (100) nach einem der Ansprüche 1 bis 5, wobei eine die Lagerkammer begrenzende Innenfläche der Dichtungshülle (1) mindestens teilweise mit einer fluorierten Beschichtung (16) bedeckt ist.

7. Verbundbehälter (100) nach einem der Ansprüche 1 bis 6, wobei die Verstärkungsschicht (2) eine Filamentwicklung aus Kohlefasern umfasst, die mit einem duroplastischen Polymer imprägniert sind, das das zweite Verbundmaterial auf der Dichtungshülle (1) bildet.

8. Verbundbehälter (100) nach Anspruch 7, wobei die Filamentwicklung eine Überlagerung von Spiralwicklungsschichten (17) in Bezug auf die Längsausdehnungsachse der Dichtungshülle (1) umfasst, zwischen denen mindestens eine um 90° in Bezug auf die Längsausdehnungsachse der Dichtungshülle (1) ausgerichtete Umfangswicklungsschicht (18) zwischengelegt ist.

9. Verfahren zur Herstellung eines Verbundbehälters (100) nach einem der Ansprüche 1 bis 8, wobei das Verfahren einen Schritt des Bildens der Dichtungshülle (1) aus einem ersten Verbundmaterial umfasst, gefolgt von einem Schritt des Herstellens einer Verstärkungsschicht (2) aus einem zweiten Verbundmaterial auf der Dichtungshülle (1), so dass sie die Dichtungshülle (1) mindestens teilweise bedeckt.

## Claims

1. A composite tank (100) intended to receive and store a cryogenic propellant, the composite tank (100) comprising:
- a sealing envelope (1) delimiting a storage chamber for the cryogenic propellant, the sealing envelope (1) comprising a first composite material, and
- a reinforcement layer (2) configured to at least partially cover the sealing envelope (1), the reinforcement layer (2) comprising a second composite material, the first composite material comprising a composite textile including carbon fibers impregnated with a thermosetting polymer, and the sealing envelope (1) comprising a layup of plies (11) of said composite textile.

2. The composite tank (100) according to claim 1, wherein the first composite material and the second composite material each comprise carbon fibers impregnated with a thermosetting polymer, such as an epoxy resin.

3. The composite tank (100) according to claims 1 to 2, wherein the first composite material comprises a volume ratio of carbon fibers of between 45 and 65% of the total volume of the first composite material.

4. The composite tank (100) according to any of claims 1 to 3, wherein the sealing envelope (1) comprises two parts (5, 6) made of the composite textile, each of the two parts (5, 6) having an overall cylindrical shape and comprises a first hemispherical end region (12) and a second open end region (13), the second open end regions (13) of each of the two parts (5, 6) being assembled together by interlocking and bonding with an epoxy adhesive.

5. The composite tank (100) according to any of claims 1 to 4, comprising two opposite connecting members (3) integrated in the sealing envelope (1), the interface between each of the two connecting members (3) and the sealing envelope (1) comprises a joining element (8) formed from a thermosetting polymer, such as an epoxy adhesive.

6. The composite tank (100) according to any of claims 1 to 5, wherein an inner surface of the sealing envelope (1) delimiting the storage chamber is at least partially covered by a fluorinated coating (16).

7. The composite tank (100) according to any of claims 1 to 6, wherein the reinforcement layer (2) comprises a filament winding of carbon fibers impregnated with a thermosetting polymer, composing the second composite material, on the sealing envelope (1).

8. The composite tank (100) according to claim 7, wherein the filament winding comprises a superposition of helical winding layers (17) relative to the longitudinal axis of extension of the sealing envelope (1), between which are interposed at least one circumferential winding layer (18) oriented at 90° relative to the longitudinal axis of extension of the sealing envelope (1).

9. A method for manufacturing a composite tank (100) according to any of claims 1 to 8, the method comprising a step of forming the sealing envelope (1) in a first composite material followed by a step of manufacturing a reinforcement layer (2) in a second composite material on the sealing envelope (1) so as to at least partially cover the sealing envelope (1).
